# EUROPEAN PATENT APPLICATION

(11) **EP 4 667 147 A1**
(43) Date of publication of application: **24.12.2025**
(21) Application number: 25182612.9
(22) Date of filing: 13.06.2025
(51) Int. Cl.: B23D 65/00, B27B 17/02, B23K 31/02

(54) **A METHOD FOR MANUFACTURING GUIDE BAR, GUIDE BAR, AND WORKING MACHINE**

(30) Priority: 21.06.2024 JP 2024100842; 25.04.2025 JP 2025073100
(71) Applicant: Yamabiko Corporation, Ohme-shi, Tokyo 198-8760 (JP)
(72) Inventor: SANDO, Natsumi, Tokyo, 1988760 (JP); ISHIJIMA, Shun, Tokyo, 1988760 (JP); FUJISAWA, Takashi, Tokyo, 1988760 (JP)
(74) Representative: Winter, Brandl - Partnerschaft mbB

(57) **Abstract**

According to an aspect of the present disclosure, a method for manufacturing a guide bar adapted to be used by looping a saw chain therearound is provided in which the method includes a first step of preparing a guide bar body made of a first metal material, and powder made of a second metal material having higher heat resistance and wear resistance than the first metal material; and a second step of forming a coating layer that covers at least an end portion of the guide bar body by supplying the powder to at least the end portion of the guide bar body and performing operation of melting the powder at least once with irradiation of a laser beam.

## Description

### BACKGROUND

The present disclosure relates to a method for manufacturing a guide bar, a guide bar, and a working machine.

### RELATED ART

A cutting blade (working portion) of a chainsaw is configured by looping a saw chain around the outer periphery portion of a guide bar. Then, the heat resistance and wear resistance of the end portion of the guide bar, that is, the portion having high thermal stress during the rotation of the saw chain, are enhanced (see JPH04-119801 A).

In JPH04-119801 A, a method is disclosed including arranging a guide bar (base material) with its end portion pre-processed in a recess of a mold, filling a space generated therebetween with a powdered wear-resistance member, and fusing the wear-resistance member by heating and melting it.

In addition, the guide bar is manufactured by further performing overlay welding manually to the end portion of the base material using a filler (welding rod).

However, there is a need to further improve the bonding strength between the base material and the wear-resistance member. In addition, a manual overlay welding work requires an operator to have a high level of skill.

In view of the above circumstances, the present disclosure provides a method for manufacturing a guide bar that can relatively easily manufacture a guide bar having excellent bonding strength between a guide bar body and a coating layer, a guide bar having such characteristics, and a working machine provided with the guide bar.

According to an aspect of the present disclosure, a method for manufacturing a guide bar adapted to be used by looping a saw chain therearound is provided in which the method comprises a first step of preparing a guide bar body made of a first metal material, and powder made of a second metal material having higher heat resistance and wear resistance than the first metal material; and a second step of forming a coating layer that covers at least an end portion of the guide bar body by supplying the powder to at least the end portion of the guide bar body and performing operation of melting the powder at least once with irradiation of a laser beam.

According to such an aspect, a guide var having excellent bonding strength between the guide bar body and the coating layer can be manufactured relatively easily.

### BRIEF DESCRIPTION OF DRAWINGS

FIG. 1 is a right side view showing an appearance of a chainsaw.
FIG. 2 is a left side view showing an appearance of the chainsaw.
FIG. 3 is a top view showing the chainsaw with some components omitted.
FIG. 4 is a cross-sectional view taken along line A-A in FIG. 3.
FIG. 5A is a right side view showing a guide bar, and FIG. 5B is a front view showing a guide bar.
FIG. 6A to FIG. 6C each shows a manufacturing process of the guide bar.
FIG. 7 is a schematic diagram showing a configuration of a nozzle head of a laser coating device used to form a coating layer.
FIG. 8A and FIG. 8B are schematic diagrams each showing a configuration of a guide bar body (FIG. 8A is a side view, and FIG. 8B is a front view), in a state where a coating layer is formed.
FIG. 9 is a photograph showing an appearance of the guide bar body in a state where the coating layer is formed.
FIG. 10 shows photographs showing appearance of the guide bars manufactured in an example and a comparative example.
FIG. 11 is a graph showing changes in hardness of the guide bars manufactured in an example and a comparative example.
FIG. 12 shows characteristic X-ray images and line analysis results of the guide bar manufactured in the comparative example.
FIG. 13 shows characteristic X-ray images and line analysis results of the guide bar manufactured in the example.
FIG. 14 shows photographs showing appearance of the guide bars manufactured in the example and the comparative example before and after a strength test.

### DETAILED DESCRIPTION

Hereinafter, the present embodiment will be described with reference to the drawings. Various features described in the embodiment below can be combined with each other.

### <Chainsaw>

First, a chainsaw 1 according to one embodiment of a working machine will be described. The chainsaw 1 is a working machine for cutting, machining, processing, etc. (hereinafter simply referred to as "processing") work targets such as trees, branches, and the like. For example, a motor or an engine is adopted as a power source. In the following, a chainsaw 1 using a motor as a power source will be described as an example.

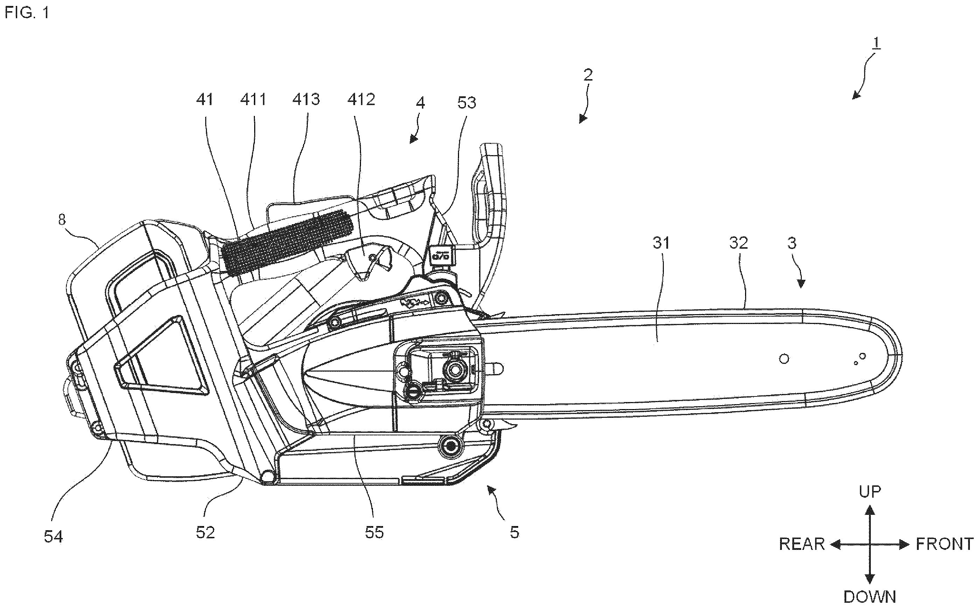

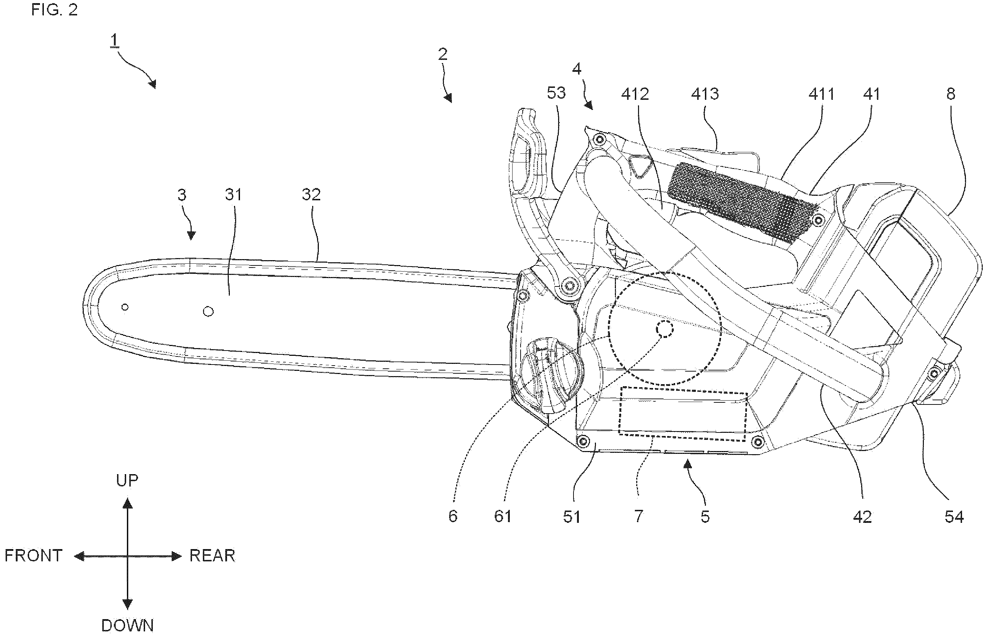

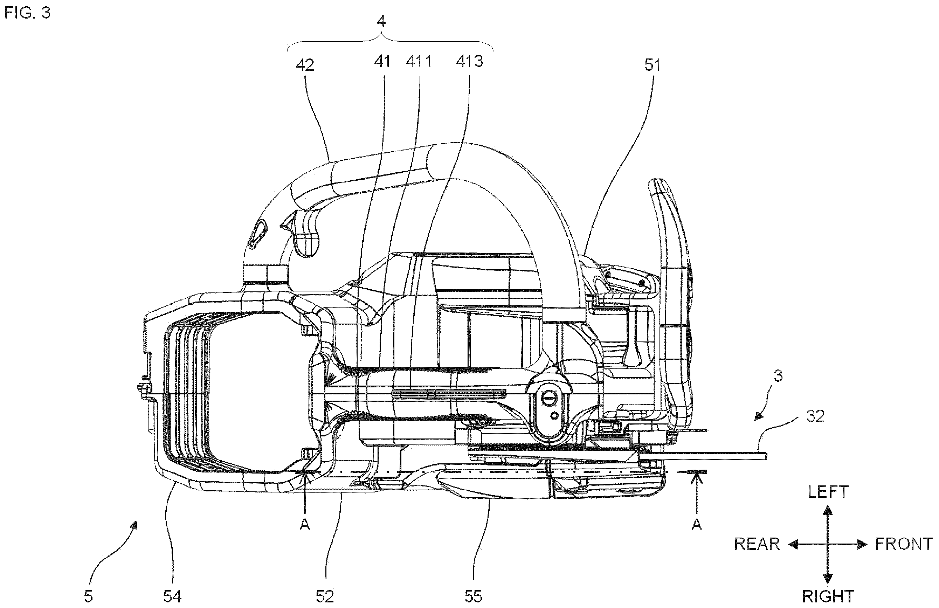

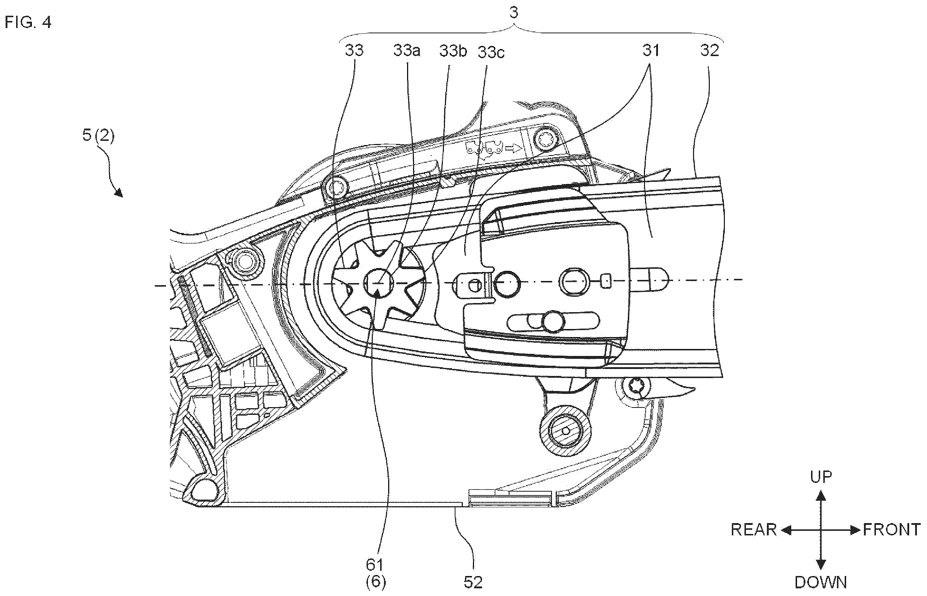

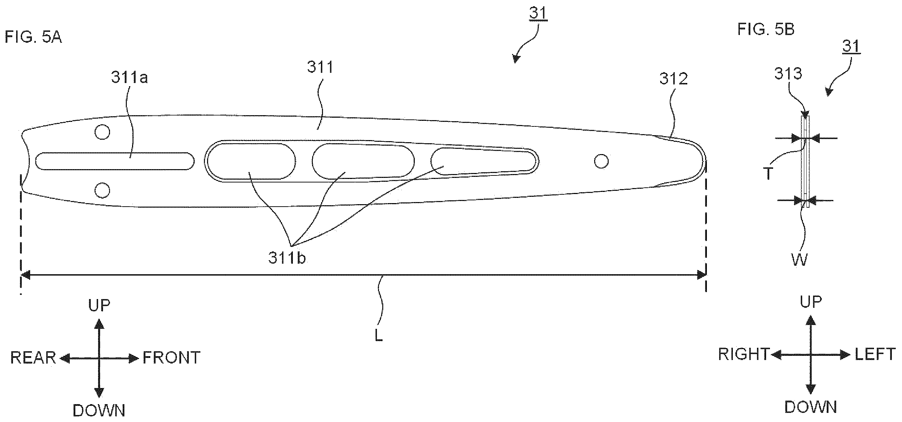

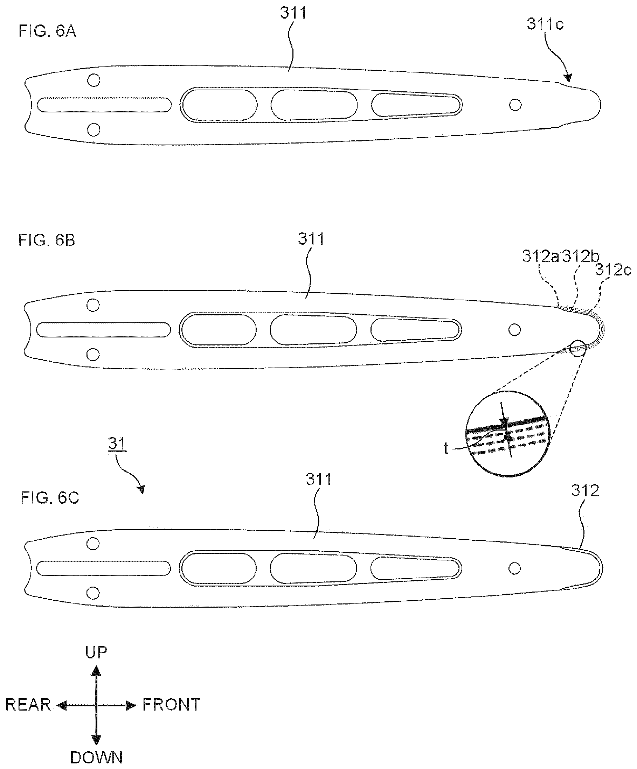

FIG. 1 is a right side view showing an appearance of the chainsaw. FIG. 2 is a left side view showing an appearance of the chainsaw. FIG. 3 is a top view showing the chainsaw with some components omitted. FIG. 4 is a cross-sectional view taken along line A-A in FIG. 3. FIG. 5A is a right side view showing a guide bar, and FIG. 5B is a front view showing a guide bar. FIG. 6A to FIG. 6C each shows a manufacturing process of the guide bar.

In the following description, directions of the chainsaw 1 and each member configuring the chainsaw 1 are defined based on "up", "down", "left", "right", "front" and "rear" shown in FIG. 1 to FIG. 6.

The chainsaw 1 shown in FIG. 1 and FIG. 2 is a small chainsaw referred to as a top-handle saw. The chainsaw 1 includes a main body portion 2 and a battery 8. Furthermore, the main body portion 2 includes a working portion 3, a handle 4, a housing 5, and a motor 6 and a control unit 7 which are housed in the housing 5.

### (Working portion 3)

The working portion 3 is configured to process a working target and is connected to the housing 5. In the configuration shown in the drawing, the working portion 3 is a chain-type cutter and includes a guide bar 31, a saw chain 32, and a drive sprocket 33.

As shown in FIG. 1 and FIG. 2, the guide bar 31 is a plate-like member extending in a front-rear direction, and the rear end portion of the guide bar 31 is attached to the right front portion of the housing 5. As shown in FIG. 4, the guide bar 31 is arranged in front of the drive sprocket 33.

The saw chain 32 is formed in an annular shape and includes a blade on its outer periphery for treating the work target. In the state shown in the drawing, the saw chain 32 is engaged with the guide bar 31 at the front end side of the guide bar 31, and is engaged (meshed) with the drive sprocket 33 connected to the rotating shaft 61 of the motor 6 at the rear end side of the guide bar 31. That is, the saw chain 32 is looped around the guide bar 31 and the drive sprocket 33.

Furthermore, the saw chain 32 is configured to rotate along the outer periphery of the guide bar 31 and the drive sprocket 33 when the drive sprocket 33 rotates due to the rotational power generated by the motor 6.

The drive sprocket 33 has a substantially disk-like shape and includes a plurality of protrusions (teeth) 33c protruding outwardly on its outer periphery. The tip of each protrusion 33c is configured so as to engage (mesh) with a part of the saw chain 32. The drive sprocket 33 also includes a shaft hole 33b in the center of its substantially disk-like shape.

The drive sprocket 33 includes a rotating shaft 33a at the center of the shaft hole 33b. This rotating shaft 33a is arranged behind the guide bar 31 along a left-right direction of the main body portion 2.

The shaft hole 33b is fitted with the rotating shaft 61 of the motor 6. As a result, the drive sprocket 33 is configured to rotate due to the rotational power generated by the motor 6. As shown in FIG. 4, specifically, the shaft hole 33b and the rotating shaft 61 are configured as a shaft hole and a shaft each having flat portions at the front and rear, thereby preventing the rotating shaft 61 from rotating within the shaft hole 33b.

When the drive sprocket 33 rotates (rotates to the right in FIG. 4), it sequentially engages with the saw chain 32 at its front lower portion, while sequentially disengaging from the saw chain 32 at its front upper portion. With this configuration, the rotation of the drive sprocket 33 allows the saw chain 32 to move along the guide bar 31.

The shaft hole 33b and the rotating shaft 61 may be any mechanism capable of transmitting rotational power, and may be, for example, a spline mechanism or a mechanism using a key and keyway.

### (Handle 4)

As shown in FIG. 1 and FIG. 2, the handle 4 includes a top handle 41 provided at the upper side of the housing 5, and a lateral handle 42 provided on the left side of the housing 5. An operator performs work by gripping the top handle 41 and the lateral handle 42 with his/her respective hands.

### (Top handle 41)

The top handle 41 is arranged at the upper side of the housing 5. The top handle 41 is formed continuously with an upper surface of the housing 5, and is extended in the front-rear direction at the upper side of the housing 5. A front side of the top handle 41 is fixed to a front end portion 53 of the housing 5 that protrudes upward from the housing 5.

Note that, a drive switch (not shown) is provided inside the front end portion 53 of the housing 5. This drive switch controls operations of the working portion 3. Specifically, the drive switch controls rotation speed of the motor 6 according to the amount of depression of the head, thereby increasing or decreasing the rotation speed of the saw chain 32.

Furthermore, a rear side of the top handle 41 is fixed to a battery detachable portion 54 of the housing 5. In a state in which the battery 8 is attached to the battery detachable portion 54, an upper end portion of the battery 8 protrudes upward from the rear end portion of the top handle 41.

A gripping portion 411 extending in the front-rear direction is provided between the front end portion and the rear end portion of the top handle 41. The gripping portion 411 is inclined obliquely downward at a slight angle from the front end portion to the rear end portion of the top handle 41. The gripping portion 411 is a part that an operator grips when holding the chainsaw 1. The hand of the operator is inserted Into a space between the gripping portion 411 and the upper surface of the housing 5.

A trigger lever 412 is arranged on a lower surface of the front end portion of the gripping portion 411 as an operation means for increasing or decreasing the rotation speed of the saw chain 32. That is, the trigger lever 412 is configured to control operation of the working portion 3 via a drive switch (not shown). The operator can operate the trigger lever 412 while gripping the gripping portion 411.

In addition, on an upper surface of the gripping portion 411, a lockout lever 413 is provided displaceably relative to the trigger lever 412. Specifically, the lockout lever 413 is arranged to be freely retractable relative to the gripping portion 411 (the top handle 41).

When the operator grips the gripping portion 411, a palm of the operator presses and embeds the lockout lever 413 into the gripping portion 411. This allows the lockout lever 413 and the trigger lever 412 to be operatively connected with each other in the gripping portion 411 so that the trigger lever 412 can be operated for the first time.

As a result, the trigger lever 412 and the lockout lever 413, both of which are provided in the gripping portion 411, constitute an operation mechanism. By operating this operation mechanism, operations of the working portion 3 can be controlled, that is, the rotation speed of the saw chain 32 can be increased or decreased.

### (Lateral handle 42)

The lateral handle 42 extends in the front-rear direction from a front end portion to a rear end portion of a left side surface of the housing 5. The lateral handle 42 may be made of resin, or may be formed by bending a lightweight metal pipe. The front end portion of the lateral handle 42 is attached to a left side surface of the front end portion of the top handle 41. The rear end portion of the lateral handle 42 is arranged at the rear and lower part of the housing 5 and is attached to a left side wall of the battery detachable portion 54. A portion between the front end portion and the rear end portion of the lateral handle 42 is curved so as to bulge outward relative to the left side surface of the housing 5 (see FIG. 3).

### (Housing 5)

The housing 5 is a box made of resin which houses a machine and electrical equipment that operate the chainsaw 1. As shown in FIG. 2, specifically, the motor 6 and the control unit 7 is housed in the housing 5. The housing 5 also includes the battery detachable portion 54 to/from which the battery 8 can be attached and detached.

As shown in FIG. 1, the battery detachable portion 54 has a cylindrical shape extending from the lower side to the upper side. Furthermore, the battery detachable portion 54 is formed at a rear portion of the housing 5 and is inclined so that a lower part of the battery detachable portion 54 is positioned more forward than an upper part thereof. The battery detachable portion 54 is provided with a metal connection terminal (not shown). The connection terminal is electrically connected to the motor 6 and the control unit 7. Then, a connection terminal of the battery 8 is connected to the connection terminal of the battery detachable portion 54, so that the battery 8 supplies electric power to the motor 6 and the control unit 7.

As shown in FIG. 3, the housing 5 includes a left cover 51 and a right cover 52, and can be separated in the left-right direction. The left cover 51 and the right cover 52 are joined together, thereby forming a space for housing the motor 6 and the control unit 7.

In addition, as shown in FIG. 3, a sprocket cover 55 is detachably attached to the right side surface of the right cover 52. The sprocket cover 55 is a box-shaped member and is configured so as to cover the components disposed on the right cover 52. As shown in FIG. 4, on the right side of the right cover 52, the rotating shaft 61 of the motor 6 protruding to the right side from the right cover 52, the drive sprocket 33 fitted with the end portion of the rotating shaft 61, the guide bar 31 arranged in front of the drive sprocket 33, and the saw chain 32 looped around the guide bar 31 and the drive sprocket 33 are arranged. The sprocket cover 55 is attached to the right cover 52 so as to cover the rotating shaft 61, the drive sprocket 33, a part of the saw chain 32, and a part of the guide bar 31.

### (Motor 6)

The motor 6 is a known electric motor, and is configured to generate rotational power for driving the working portion 3. As shown in FIG. 2, the motor 6 includes the rotating shaft 61. The rotating shaft 61 extends in the left-right direction, and a right end portion thereof is connected to the drive sprocket 33, as shown in FIG. 4.

### (Control Unit 7)

As shown in FIG. 2, the control unit 7 has a box shape and is fixed to the housing 5. The control unit 7 is electrically connected to the motor 6 and the battery 8 via wiring, a connector or the like, and controls energization from the battery 8 to the motor 6. The control unit 7 is configured to electrically control the rotation of the motor 6.

### (Battery 8)

As shown in FIG. 1, the battery 8 is a known battery and is configured by housing a secondary battery such as a lithium ion secondary battery, in a rectangular parallelepiped case extending in an up-down direction. The battery 8 is formed to have a height that is greater than the height of the rear end portion of the housing 5. Such a battery 8 has a size larger than that of a battery in a type to be stored in the housing 5. Then, the battery 8 has sufficiently high output and charging capacity suitable for work.

When attaching the battery 8 to the battery detachable portion 54, the battery 8 is fitted with the battery detachable portion 54 by sliding the battery 8 from the upper side to the lower side relative to the battery detachable portion 54. Then, when the battery 8 is moved to a position where the battery 8 is supported by the battery detachable portion 54, an engagement portion of the battery 8 is engaged with the battery detachable portion 54 so as to be fixed to the battery detachable portion 54.

The battery 8 that has been attached to the battery detachable portion 54 is disposed to be inclined such that a lower part of the battery 8 is positioned forward of an upper part thereof. The battery 8 includes a connection terminal (not shown) and is fixed to the battery detachable portion 54, whereby the connection terminal of the battery 8 and a connection terminal (not shown) of the battery detachable portion 54 are electrically connected. Then, by connecting the connection terminal of the battery 8 to the connection terminal of the battery detachable portion 54, the battery 8 supplies electric power to the motor 6 and the control unit 7.

In detaching the battery 8 from the battery detachable portion 54, when a connecting lever (not shown) of the battery 8 is pulled up, the engaged state between the battery detachable portion 54 and the engagement portion is released, whereby the battery 8 can be slid upward relative to the battery detachable portion 54.

Hereinafter, the guide bar 31 will now be described in more detail.

### (Guide bar 31)

As described above, the guide bar 31 is adapted to be used by looping the saw chain 32 therearound. The guide bar 31 shown in FIG. 5 includes a guide bar body 311 made of a first metal material, and a coating layer 312 covering at least an end portion of the guide bar body 311 and made of a second metal material having higher heat resistance and wear resistance than the first metal material. This configuration makes it possible to impart excellent heat resistance and high wear resistance to the end portion having high thermal stress when the saw chain 32 is rotated.

Also, the guide bar 31 has an area in the guide bar body 311 on a side of the coating layer 312 thereof where a metallic element contained in the second metal material is diffused into the first metal material, and/or an area in the coating layer 312 on a side of the guide bar body 311 thereof where a metallic element contained in the first metal material is diffused into the second metal material. With this configuration, even if a large force is continuously applied to the coating layer 312 when the saw chain 32 is rotated, breakage at the interface between the coating layer 312 and the guide bar body 311 can be suitably prevented.

Note that it is preferable that the above-mentioned area is present in both the guide bar body 311 and the coating layer 312, in other words, is present across the guide bar body 311 and the coating layer 312. In this case, the area can also be referred to a mixed area (diffusion area) where components of the first metal material and components of the second metal material are mixed together.

The first metal material is preferably carbon steel. Carbon steel is preferable because it has high hardness and is easily available. Examples of carbon steel include low carbon steel, medium carbon steel, and high carbon steel (so-called SK steel), but high carbon steel is suitable.

The second metal material may be any metal material as long as it has higher heat resistance and wear resistance than the first metal material, but is preferably at least one selected from the group consisting of a Co-based alloy, a Ni-based alloy, a Fe-based alloy, and a mixture in which at least one of oxide-based ceramics and carbide-based ceramics is mixed with these alloys. By selecting such a second metal material, the above effect can be further enhanced.

Examples of the oxide-based ceramics include alumina (Al₂O₃) and silica (SiO₂). Examples of the carbide-based ceramics include diamond, titanium nitride (TiN), silicon carbide (SiC), and tungsten carbide (WC).

Among them, the second metal material is preferably a Co-based alloy (Stellite) alone, a Fe-based alloy (Fe-Cr-Ni alloy) alone, or a mixture of a Co-based alloy and a Fe-based alloy, because it is easy to handle.

As shown in FIG. 5A, it is preferable that the peripheral surface of the guide bar body 311 and the peripheral surface of the coating layer 312 form a continuous surface (a surface without a step). This allows the saw chain 32 to rotate smoothly along the outer peripheral surface of the guide bar 31.

As shown in FIG. 5B, the guide bar 31 has a groove 313 formed around its entire periphery in the middle (center) of the guide bar 31 in its thickness direction. A part of the saw chain 32 is inserted into this groove 313, thereby guiding the rotation of the saw chain 32 relative to the guide bar 31.

The width W of the groove 313 is not particularly limited, but is preferably approximately 1.1 mm or more and 1.6 mm or less.

With this configuration, the coating layer 312 is provided on each wall portion of both sides having the groove 313 of the guide bar body 311 interposed therebetween.

The groove 313 may be formed in at least a part of the guide bar body 311 in its circumferential direction including the end portion of the guide bar body 311 (for example, excluding the portion facing the drive sprocket 33).

The guide bar body 311 includes an elongated hole 311a through which a bolt or a pin for fixing to the housing 5 can be inserted. The guide bar body 311 also includes three through holes (lightening holes) 311b to reduce weight.

As shown in FIG. 5A, the total length L of the guide bar 31 is not particularly limited, but is preferably about 240 mm or more and 1170 mm or less.

As shown in FIG. 5B, the thickness T of the guide bar 31 is also not particularly limited, but is preferably about 3.1 mm or more and 4.9 mm or less.

### (Method for manufacturing guide bar 31)

The guide bar 31 adapted to be used by looping the saw chain 32 therearound as described above can be manufactured as follows.

A method for manufacturing a guide bar according to the present embodiment includes [1] a preparation step (a first step) of preparing the guide bar body 311 made of a first metal material, and powder P made of a second metal material having higher heat resistance and wear resistance than the first metal material, [2] a groove forming step of forming the groove 313 in at least a part of the guide bar body 311 in its circumferential direction including the end portion (around its entire periphery in the present embodiment) in the middle of the guide bar body 311 in its thickness direction, and [3] a coating layer forming step (a second step) of forming the coating layer 312 that covers the end portion of the guide bar body 311 by supplying the powder P to the end portion of the guide bar body 311 and performing operation of melting the powder P at least once with irradiation of the laser beam LB.

### [1] Preparation step

In this step, the guide bar body 311 and the powder P are prepared. These may be commercially available or may be manufactured by the user.

The first metal material and the second metal material are the same as those described above, respectively.

The average particle diameter of the particles constituting the powder P is preferably about 15 µm or more and 250 µm or less, and more preferably about 45 µm or more and 150 µm or less. Use of the powder P containing particles with such an average particle diameter makes it easy to form the dense coating layer 312 that has high bonding strength to the guide bar body 311.

Note that the average particle diameter of the particle refers to the particle diameter at 50% of the integrated value in volume basis in the particle size distribution determined by a laser diffraction/scattering method.

### [2] Groove forming step

In this step, the groove 313 is formed in at least a part of the guide bar body 311 in its circumferential direction (around its entire periphery in the present embodiment) including the end portion, in the middle of the guide bar body 311 in its thickness direction. In addition, the formation of the groove 313 may be omitted at locations where the saw chain 32 does not come into contact (e.g., at the rear end of the guide bar body 311).

The groove 313 can be formed, for example, by laser processing, machining, etc.

By using a laser laminate shaping method in the next step [3], the coating layer 312 can be accurately formed even on each narrow wall portion of both sides having the groove 313 of the guide bar body 311 interposed therebetween.

### [3] Coating layer forming step

As shown in FIG. 6A, a U-shaped defective portion 311c is formed at the end portion of the guide bar body 311 in an area where the coating layer 312 is to be formed.

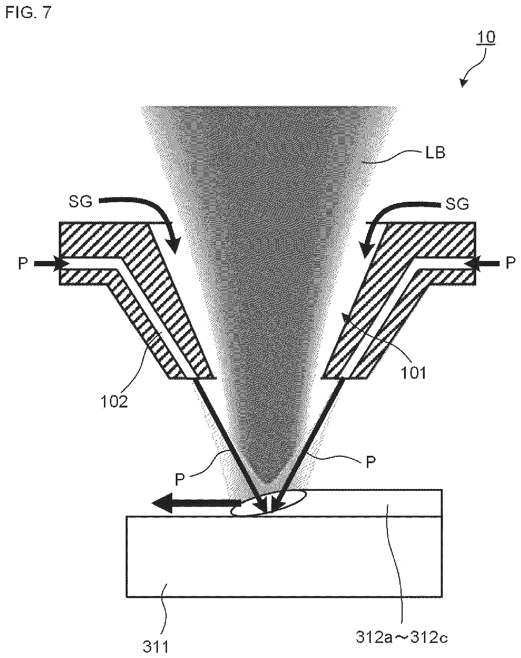

While supplying the powder P to this defective portion 311c, operation of melting the powder P with the irradiation of the laser beam LB is performed. For example, a laser coating device is preferably used for this operation. That is, preferably, the supply of the powder P and the irradiation of the laser beam LB are performed using a single nozzle head 10. FIG. 7 is a schematic diagram showing a configuration of a nozzle head of the laser coating device used to form a coating layer.

The nozzle head 10 shown in FIG. 7 includes a tapered opening 101 formed in the center for allowing the laser beam LB to pass through, and a passage 102 formed inside the peripheral wall of the nozzle head 10 for allowing the powder P to pass through.

The opening 101 is configured so that a shielding gas SG is supplied along the inner peripheral surface. The nozzle head 10 is configured to be cooled by a coolant (e.g., water).

According to such a configuration, the powder P is ejected in a conical (cone) shape from the tip of the nozzle head 10 and is supplied onto the surface of the defective portion 311c of the guide bar body 311. At the same time, the laser beam LB is irradiated near the top of the cone of the powder P. Then, the nozzle head 10 is moved relative to the guide bar body 311. This causes the powder P to be melted, and a first coating layer (unit coating layer) 312a is formed on the surface of the end portion of the guide bar body 311.

The number of times the above operations are repeated is not particularly limited, but is preferably about 1 to 10 times, and more preferably about 3 to 7 times.

In the present embodiment, the above operations are repeated three times to laminate the unit coating layers 312a, 312b, and 312c (so-called laser laminate shaping method), thereby obtaining the coating layer 312.

By slightly shifting the forming start position and the forming end position of the unit coating layers 312a, 312b, and 312c, the peripheral surface of the guide bar body 311 and the peripheral surface of the coating layer 312 can easily be formed as a continuous surface.

In the coating layer forming step (second step), the thickness t (see FIG. 6B) of each of the coating layers (unit coating layers) 312a to 312c formed by the operation once is preferably about 0.1 mm or more and 1 mm or less, and more preferably about 0.3 mm or more and 0.7 mm or less. This makes it easier to form a more homogeneous coating layer 312.

It should be noted that, by adjusting the amount of the powder P ejected from the nozzle head 10 per unit time (powder feeding amount), the intensity and/or wavelength of the laser beam LB, the focal diameter of the laser beam LB, the moving speed of the nozzle head 10, the type and/or flow rate of the shielding gas SG, etc., it is possible to generate an area in the guide bar body 311 on a side of the coating layer 312 thereof where a metallic element contained in the second metal material is diffused into the first metal material, and/or an area in the coating layer 312 on a side of the guide bar body 311 thereof where a metallic element contained in the first metal is diffused into the second metal material.

Specifically, the powder feeding amount is preferably about 5 g/min or more and 20 g/min or less, and more preferably about 10 g/min or more and 15 g/min or less.

The focal diameter of the laser beam LB is preferably about 1 mm or more and 2.5 mm or less, and more preferably about 1.5 mm or more and 2 mm or less.

The flow rate of the shielding gas SG (shielding gas flow rate) is preferably about 1 L/min or more and 25 L/min or less, and more preferably about 3 L/min or more and 20 L/min or less

In addition, it is easy to increase welding strength and durability by increasing the number of times that the unit coating layers are laminated, but the above-mentioned conditions are appropriately set taking into consideration productivity (cost, processing time, etc.), the size of the guide bar 31, etc.

In addition, a post-processing step may be performed after the coating layer forming step. Such post-processing step includes, for example, cleaning, polishing, machining, and in some cases heat treatment of the guide bar 31.

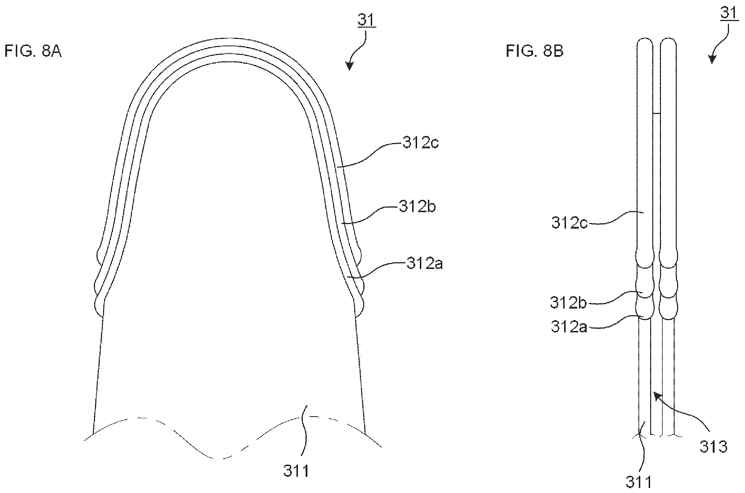

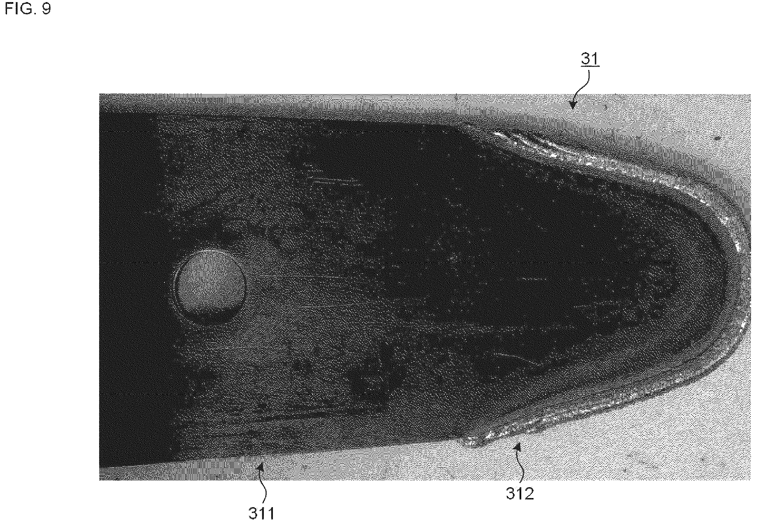

FIG. 8A and FIG. 8B are schematic diagrams each showing a configuration of the guide bar body (FIG. 8A is a side view, and FIG. 8B is a front view), in a state where the coating layer is formed. FIG. 9 is a photograph showing an appearance of the guide bar body in a state where the coating layer is formed.

As shown in FIG. 8A, FIG. 8B and FIG. 9, in the case where the peripheral surface of the guide bar body 311 and the peripheral surface of the coating layer 312 do not form a continuous surface (in a case where there are unevenness at the boundary or in the vicinity thereof), it is preferable to perform polishing, machining, etc. to the peripheral surface of the guide bar 31. This can improve the sliding ability of the saw chain 32 relative to the guide bar 31.

The coating layer 312 may be provided not only on the end portion of the guide bar body 311 but also provided over the entire periphery of the guide bar body 311.

The guide bar body 311 may be a laminated type (three-piece joint type). In this case, the formation of the groove 313 in the guide bar body 311 can be omitted.

In the embodiment described above, the small chainsaw 1 referred to as a top handle saw has been described as an example of a working machine, but the working machine may be a pruner or the like.

Furthermore, the device for forming the coating layer 312 is not limited to the laser coating device including the nozzle head 10 shown in FIG. 7, but various devices capable of forming a coating layer 312 having similar characteristics to those described above can be used, such as a device that irradiates a laser beam LB while linearly supplying the powder P.

Furthermore, the present disclosure may be provided in each of the following aspects.
(1) A method for manufacturing a guide bar adapted to be used by looping a saw chain therearound, comprising: a first step of preparing a guide bar body made of a first metal material, and powder made of a second metal material having higher heat resistance and wear resistance than the first metal material; and a second step of forming a coating layer that covers at least an end portion of the guide bar body by supplying the powder to at least the end portion of the guide bar body and performing operation of melting the powder at least once with irradiation of a laser beam.
(2) The method for manufacturing a guide bar according to (1), wherein a supply of the powder and the irradiation of the laser beam are performed using a single nozzle head.
(3) The method for manufacturing a guide bar according to (1) or (2), wherein an average particle diameter of particles constituting the powder is 15 µm or more and 250 µm or less.
(4) The method for manufacturing a guide bar according to any one of (1) to (3), further comprising: a step of forming a groove in at least a part of the guide bar body in its circumferential direction including the end portion, in a middle of the guide bar body in its thickness direction prior to the second step.
(5) The method for manufacturing a guide bar according to any one of (1) to (4), wherein, the first metal material is carbon steel.
(6) The method for manufacturing a guide bar according to any one of (1) to (5), wherein the second metal material is at least one selected from a group consisting of a Co-based alloy, a Ni-based alloy, a Fe-based alloy, and a mixture in which at least one of oxide-based ceramics and carbide-based ceramics is mixed with these alloys.
(7) The method for manufacturing a guide bar according to any one of (1) to (6), wherein in the second step, a thickness of the coating layer formed by the operation once is 0.1 mm or more and 1 mm or less.
(8) The method for manufacturing a guide bar according to any one of (1) to (7), wherein a peripheral surface of the guide bar body and a peripheral surface of the coating layer form a continuous surface.
(9) A guide bar adapted to be used by looping a saw chain therearound, comprising: a guide bar body made of a first metal material; and a coating layer covering at least an end portion of the guide bar body and made of a second metal material having higher heat resistance and wear resistance than the first metal material; the guide bar having an area in the guide bar body on a side of the coating layer thereof where a metallic element contained in the second metal material is diffused into the first metal material, and/or an area in the coating layer on a side of the guide bar body thereof where a metallic element contained in the first metal material is diffused into the second metal material.
(10) The guide bar according to (9), wherein the guide bar body includes a groove in at least a part of the guide bar body in its circumferential direction including the end portion, and the coating layer is provided on each wall portion of both sides having the groove interposed therebetween.
(11) A working machine, comprising: a working portion configured to process a working target, the working portion including a guide bar according to (10), and a saw chain looped around the guide bar.

Of course, the present disclosure is not limited thereto.

As described above, various embodiments of the present disclosure have been described, but these are presented as examples and are not intended at all to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the disclosure described in claims and the equivalent scope thereof.

### [Example]

The guide bar and the manufacturing method thereof will be described in more detail below with reference to an example and a comparative example. However, the guide bar and the manufacturing method thereof are not limited to these examples.

### 1. Preparation of guide bar

### (Example)

The guide bar was manufactured by forming a coating layer (second metal material: Stellite) by a laser laminate shaping method at the end portion of the guide bar body (first metal material: SKS51) shown in FIG. 6A.

The guide bar body had a total length of 700 mm, and a thickness of 4.0 mm, and a width of the groove 313 was 1.4 mm.

In addition, a laser coating device having a nozzle head (manufactured by Laserline GmbH, "OTZ-5 VC") and an oscillator (manufactured by Laserline GmbH, "LDM2000-40") configured as shown in FIG. 7 was used to form the coating layer.

The particles constituting the powder had an average volume particle diameter of about 100 µm.

The conditions for forming the coating layer are as follows.
Focal diameter of laser beam: 2.0 mm
Output of laser beam: 500 W
Feeding amount of powder: 15 g/min
Moving speed of nozzle head: 500 mm/min
Shielding gas flow rate: 20 L/min

### (Comparative example)

The guide bar was manufactured by forming a coating layer by performing overlay welding manually using a filler (second metal material: Stellite) to the end portion of the guide bar body (first metal material: SKS51) shown in FIG. 6A.

### 2. Evaluation

Various evaluations were performed on the guide bars manufactured in the example and the comparative example.

### 2-1. Appearance observation

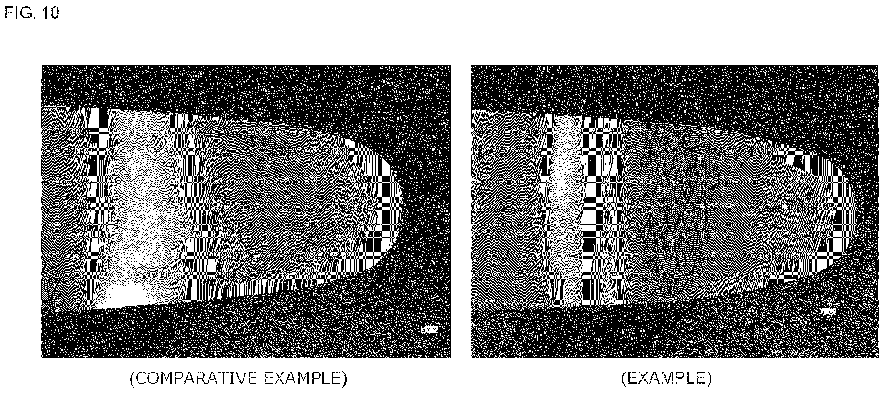

The appearance of each guide bar was observed using a digital microscope (manufactured by KEYENCE corporation, "VHX-2000"). The photographs are shown in FIG. 10.

FIG. 10 shows photographs showing the appearance of the guide bars manufactured in the example and the comparative example.

As shown in FIG. 10, there was no significant difference in appearance between the guide bar manufactured in the example and the guide bar manufactured in the comparative example.

### 2-2. Hardness measurement

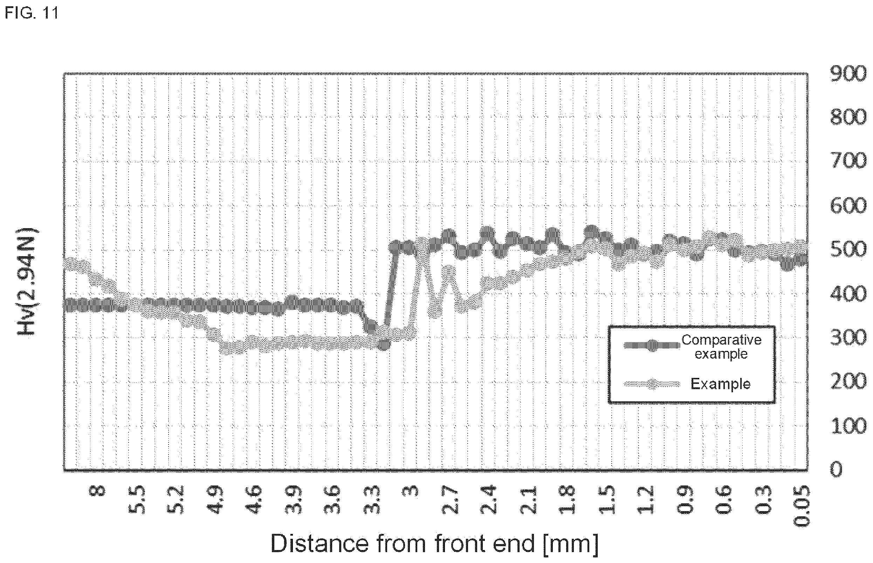

The hardness of each guide bar was measured using a micro-Vickers hardness tester (manufactured by MATSUZAWA CO.,LTD., "mmT-X") with a front to back direction as a hardness measurement direction. The results are shown in FIG. 11.

FIG. 11 is a graph showing the changes in hardness of the guide bars manufactured in the example and the comparative example.

As shown in FIG. 11, the hardness of the guide bar manufactured in the example changes gradually. In contrast, the hardness of the guide bar manufactured in the comparative example changes significantly.

### 2-3. Component analysis

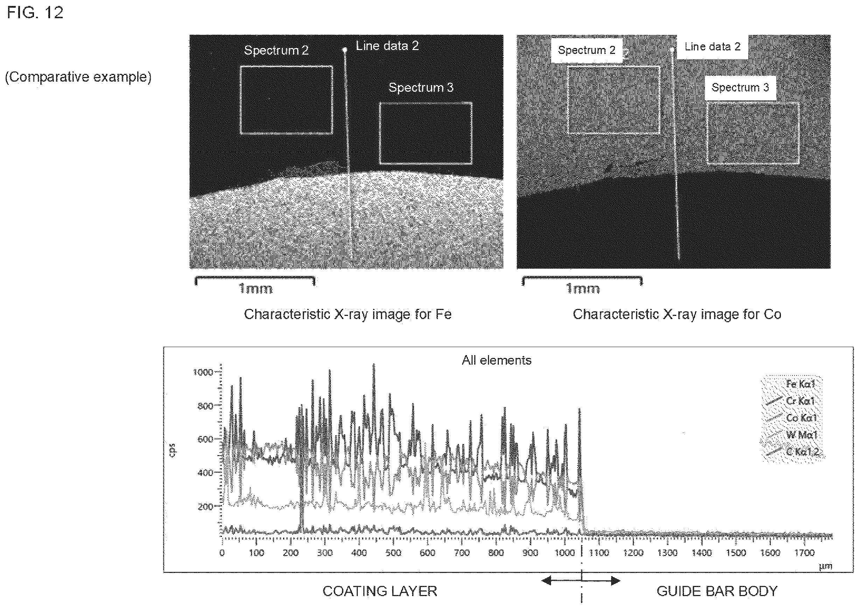

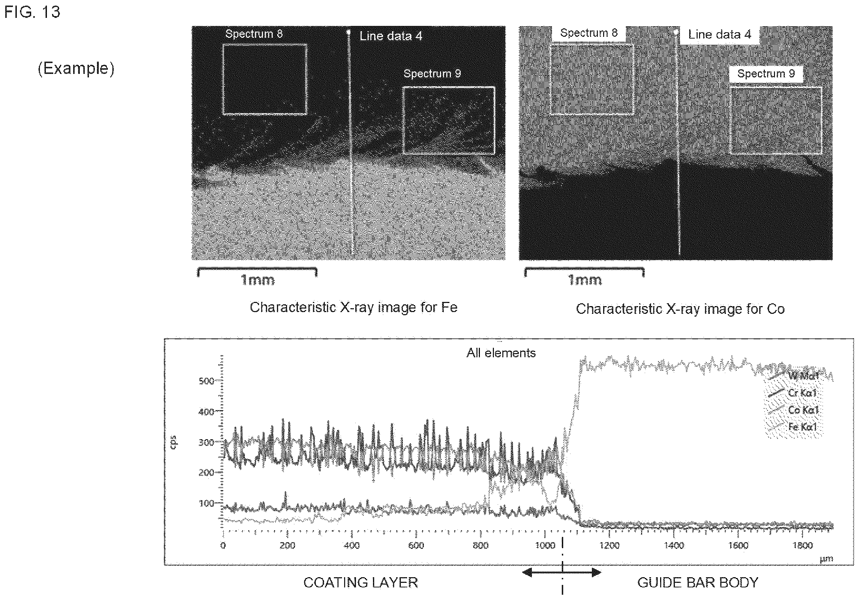

The components of each guide bar were analyzed using an energy dispersive X-ray analyzer (manufactured by Horiba, Ltd., "X-max (50 mm²)"). The results are shown in FIG. 12 and FIG. 13.

FIG. 12 shows characteristic X-ray images and line analysis results of the guide bar manufactured in the comparative example. FIG. 13 shows characteristic X-ray images and line analysis results of the guide bar manufactured in the example.

As shown in FIG. 13, in the guide bar manufactured in the example, areas in which both metal materials have diffused can be confirmed at the boundary between the guide bar body and the coating layer and in the vicinity thereof (approximately 300 µm). In contrast, as shown in FIG. 12, in the guide bar manufactured in the comparative example, the boundary between the guide bar body and the coating layer was clear.

### 2-4. Confirmation of weld strength

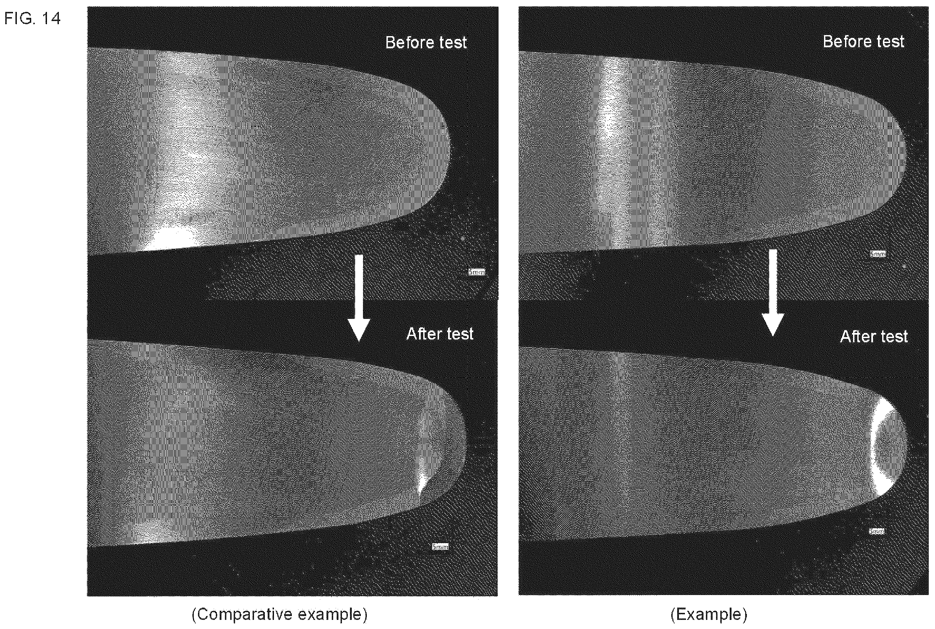

The weld strength of each guide bar was confirmed using a precision universal testing machine (manufactured by Shimadzu Corporation, "AGX-V"). The results are shown in FIG. 14.

FIG. 14 shows photographs showing the appearance of the guide bars manufactured in the example and the comparative example before and after the strength test.

As shown in FIG. 14, the guide bar manufactured in the example did not break at the interface between the guide bar body and the coating layer. In contrast, the guide bar manufactured in the comparative example broke at the interface between the guide bar body and the coating layer.

## Claims

1. A method for manufacturing a guide bar adapted to be used by looping a saw chain therearound, comprising:
a first step of preparing a guide bar body made of a first metal material, and powder made of a second metal material having higher heat resistance and wear resistance than the first metal material; and
a second step of forming a coating layer that covers at least an end portion of the guide bar body by supplying the powder to at least the end portion of the guide bar body and performing operation of melting the powder at least once with irradiation of a laser beam.

2. The method for manufacturing a guide bar according to claim 1, wherein
a supply of the powder and the irradiation of the laser beam are performed using a single nozzle head.

3. The method for manufacturing a guide bar according to claim 1 or 2, wherein
an average particle diameter of particles constituting the powder is 15 µm or more and 250 µm or less.

4. The method for manufacturing a guide bar according to any one of claims 1 to 3, further comprising:
a step of forming a groove in at least a part of the guide bar body in its circumferential direction including the end portion, in a middle of the guide bar body in its thickness direction prior to the second step.

5. The method for manufacturing a guide bar according to any one of claims 1 to 4, wherein,
the first metal material is carbon steel.

6. The method for manufacturing a guide bar according to any one of claims 1 to 5, wherein
the second metal material is at least one selected from a group consisting of a Co-based alloy, a Ni-based alloy, a Fe-based alloy, and a mixture in which at least one of oxide-based ceramics and carbide-based ceramics is mixed with these alloys.

7. The method for manufacturing a guide bar according to any one of claims 1 to 6, wherein
in the second step, a thickness of the coating layer formed by the operation once is 0.1 mm or more and 1 mm or less.

8. The method for manufacturing a guide bar according to any one of claims 1 to 7, wherein
a peripheral surface of the guide bar body and a peripheral surface of the coating layer form a continuous surface.

9. A guide bar adapted to be used by looping a saw chain therearound, comprising:
a guide bar body made of a first metal material; and
a coating layer covering at least an end portion of the guide bar body and made of a second metal material having higher heat resistance and wear resistance than the first metal material;
the guide bar having an area in the guide bar body on a side of the coating layer thereof where a metallic element contained in the second metal material is diffused into the first metal material, and/or an area in the coating layer on a side of the guide bar body thereof where a metallic element contained in the first metal material is diffused into the second metal material.

10. The guide bar according to claim 9, wherein
the guide bar body includes a groove in at least a part of the guide bar body in its circumferential direction including the end portion, and
the coating layer is provided on each wall portion of both sides having the groove interposed therebetween.

11. A working machine, comprising:
a working portion configured to process a working target,
the working portion including a guide bar according to claim 10, and a saw chain looped around the guide bar.
